# EUROPÄISCHE PATENTSCHRIFT

(11) **EP 3 725 492 B1**
(45) Veröffentlichungstag und Bekanntmachung des Hinweises auf die Patenterteilung: **10.05.2023**
(21) Anmeldenummer: 20165163.5
(22) Anmeldetag: 24.03.2020
(51) Int. Cl.: B29C 51/10, B29C 65/00, B29C 63/00, B29C 63/02, D04H 1/492

(54) **VERFAHREN ZUM HERSTELLEN EINES BEHÄLTERS MIT EINER BARRIEREFOLIE UND BEHÄLTER MIT EINER BARRIEREFOLIE**
CONTAINER WITH A BARRIER FILM AND METHOD OF MANUFACTURING A CONTAINER WITH A BARRIER FILM
PROCÉDÉ DE FABRICATION D'UN RÉCIPIENT DOTÉ D'UNE FEUILLE BARRIÈRE ET RÉCIPIENT DOTÉ D'UNE FEUILLE BARRIÈRE

(30) Priorität: 15.04.2019 DE 102019109911
(43) Veröffentlichungstag der Anmeldung: 21.10.2020
(73) Patentinhaber: GPI Frankfurt & Augsburg GmbH, 65830 Kriftel (DE)
(72) Erfinder: Mack, Ralf, 81827 München (DE)
(74) Vertreter: Hauck Patentanwaltspartnerschaft mbB

(56) Entgegenhaltungen:
- WO-A2-00/34567
- JP-A- H10 218 152
- US-A1- 2004 119 198

## Beschreibung

Die Erfindung betrifft ein Verfahren zum Herstellen eines Behälters mit einer Barrierefolie und einen Behälter mit einer Barrierefolie.

Schalen, Teller, Becher und andere Behälter mit einer Barrierefolie oder anderer Barriereschicht für Gas, Wasserdampf, Aroma oder Fett zur Aufbewahrung von Lebensmitteln sind bekannt. Sie werden beispielsweise beim Modified Atmosphere Packaging (MAP) verwendet, bei dem Lebensmittel unter Stickstoff, Kohlendioxid oder einem anderen Schutzgas verpackt werden, um die Haltbarkeit des Lebensmittels in der ungeöffneten Verpackung zu erhöhen. Bei anderen Anwendungen solcher Behälter werden die Lebensmittel zur Verbesserung der Haltbarkeit unter Vakuum verpackt. Bei beiden Verpackungsweisen ist neben einer Gasdichtigkeit eine Feuchtigkeitsbarriere erwünscht, um Feuchtigkeitsverlust des Lebensmittels zu vermeiden.

Die WO 02/085720 A2 beschreibt ein Tray für eine Verpackung mit umlaufendem Randflansch, welches innenseitig mit einer den Randflansch erfassenden Kunststofffolie, insbesondere Kunststoffverbundfolie, ausgekleidet ist. Ein vorgefertigter Zuschnitt aus Karton bildet den Verpackungsboden, die Seitenwände und den Randflansch. Die Kunststoffverbundfolie kann eine Sauerstoffsperrschicht und eine Siegelschicht sowie eine Haftschicht dazwischen aufweisen. Die Zuschnitte werden in Stapeln gelagert und transportiert und vor dem Auskleiden mit der Kunststofffolie zu einer Faltschachtel aufgerichtet. Bei der Herstellung wird zunächst der Zuschnitt zu einem Tray aufgerichtet. Dann wird das Tray mit Kunststoffverbundfolie ausgekleidet. Hierfür werden das Tray und die Verbundfolie in eine Formstation eingebracht und die Verbundfolie nach Erwärmen mittels Vakuum an die Innenseite des Trays angesaugt. Hierdurch wird eine vollständige Wärmekaschierung zwischen der Kunststoffverbundfolie und den Tray-Innenseiten bewirkt und gleichzeitig die durchgehenden Randflansche vollständig wärmekaschiert.

Nachteilig ist, dass die aneinandergrenzenden Ränder verschiedener Abschnitte des Flansches einander überlappen. Hierdurch wird das gasdichte Abdichten des Trays durch nachträgliches Aufsiegeln einer Abdeckfolie auf den Flansch erschwert.

Die EP 2 441 697 B1 beschreibt ein Verfahren zum Herstellen einer MAP-Verpackung, bei dem auf eine Faltschachtel eine Kunststofffolie auflaminiert und hierdurch die Faltschachtel in Form gehalten wird. Überlappende und miteinander verklebte Teile der Faltschachtel werden hierdurch vermieden. Die Faltschachtel ist mit Sauglöchern versehen, um das Laminieren der Kunststofffolie auf die Innenseite der Faltschachtel durch Anlegen eines Unterdruckes an deren Außenseite besser steuern zu können.

Die Herstellungsgeschwindigkeit wird durch die Notwendigkeit der präzisen Ausrichtung des aufgerichteten Zuschnittes begrenzt. Zudem können die Saugöffnungen das optische Erscheinungsbild der Faltschachtel stören.

Ferner ist nachteilig bei den bekannten Trays, dass die Möglichkeiten der Formgestaltung dadurch eingeschränkt sind, dass sie auf Faltschachteln basieren. Grundsätzlich sind die Oberflächen dieser Trays durch ebene Flächen begrenzt, die an Ecken aneinanderstoßen. Zudem sind die Faltschachteln fest mit der aufkaschierten Kunststofffolie verbunden, so dass die Trays nach Gebrauch insgesamt dem Restmüll zugeführt werden müssen.

Die EP 2 173 547 B1 beschreibt ein Verfahren zum Herstellen einer Faserschale, bei dem die Faserschale durch Eintauchen einer Entwässerungsschale mit der Form der herzustellenden Schale in ein Bad aus einer Holzstoffsuspension, Presstrocknen der gebildeten Schale mithilfe von Wärme, Beschichten des getrockneten Fasermaterials mit einer Barrierefolie und Stanzen oder Reduzieren der Dicke an einem Randabschnitt der Schale durch Stanzen oder Komprimieren dieses Abschnitts der Schale vor oder nach dem Beschichten mit der Folie gebildet wird. Die Herstellung der Faserschale in einem feuchten Verfahren aus einer Holzstoffsuspension eignet sich nicht für die Durchführung durch den Hersteller der zu verpackenden Produkte. Der gestanzte oder in der Dicke reduzierte Randabschnitt soll zwar das Ablösen der Kunststofffolie von der Faserschale erleichtern, um diese getrennt voneinander zu rezyklieren. Jedoch ist die gleichmäßig durch Wärmelaminierung an der Faserschale befestigte Folie schwer ablösbar.

Die WO 2017/160218 A1 beschreibt ein Verfahren zum Herstellen eines Zelluloseerzeugnisses, bei dem ein trockener Zelluloserohling in einer Trockenformeinheit geformt, in einer formbildenden Form angeordnet, auf eine Formtemperatur im Bereich von 100°C bis 200°C erwärmt und in der formbildenden Form mit einem Formdruck von zumindest 1 MPa geformt wird. Der Zelluloserohling kann mit einer Barrierefolie aus thermoplastischem Material wie PET, Bio-Polyethylen oder PLA versehen sein. Der Zelluloserohling wird beim Trockenformen mittels eines auf die Barrierefolie wirkenden Druckmediums oder Fluids in die Trockenformeinheit gepresst. Die Barrierefolie dient auch als Barriere gegen das Eindringen von Feuchtigkeit aus in das Zelluloseerzeugnis eingefüllten Produkten oder Flüssigkeit. Ein Ablösen der Barrierefolie vom Zelluloseerzeugnis ist nicht beschrieben. Dadurch, dass die Barrierefolie bereits auf dem Zelluloserohling aufgebracht ist, dürfte sie schwer oder gar nicht von dem Zelluloseerzeugnis ablösbar sein.

Die EP 2 679 510 B1 beschreibt einen doppelwandigen Behälter mit einer Außenwand und einer Innenhülle, die jeweils einen Boden und eine Seitenwand umfassen. Die Innenhülle ist eine Kunststofffolie mit einer thermoadhäsiven Seite, deren Seitenwand durch eine Adhäsionszone mit der Seitenwand der Außenwand fest verbunden ist. In der Adhäsionszone nimmt die Adhäsionskraft in Richtung auf den Boden des Behälters ab, um das Trennen der Innenhülle von der Außenwand zu erleichtern. Die Adhäsionseigenschaften sollen durch Spezifizieren der Eigenschaften der thermoadhäsiven Beschichtung in Abhängigkeit von der Position auf der Außenwand variiert werden. Als weitere Möglichkeit ist ein thermoplastischer Film angegeben, der zumindest zwei verschiedene Klebebeschichtungen aufweist, um zumindest zwei Adhäsionszonen mit unterschiedlichen Eigenschaften zu bilden. Ferner soll die Adhäsionskraft durch unterschiedliches lokales Dehnen der Folie und Verteilen der thermoadhäsiven Beschichtung gesteuert werden. Schließlich soll es möglich sein, die Adhäsionskraft durch Thermoformen mit einem Temperaturgradienten entlang des Behälters zu steuern. Die beschriebenen Einstellungsweisen der Adhäsionskraft sind schwer umsetzbar und beeinflussen teilweise die Adhäsionskraft nur geringfügig.

Die US 2004/119198 A1 beschreibt ein Verfahren, bei dem mittels eines Formwerkzeuges mit einer der Außenform oder der Innenform des Behälters entsprechenden formgebenden Oberfläche ein zellulosehaltiges Flachmaterial mit einer Beschichtung zum Steuern der Adhäsionswirkung einer Barrierefolie zu einem Pressling mit der Form des Behälters gepresst wird. Eine Barrierefolie mit einer durch die Beschichtung veränderbaren Adhäsionswirkung wird gegen die Innenseite des Presslings gepresst und mit dieser verbunden. In D1 wird eine starre Form bereitgestellt, die einen Hohlraum mit perforierten Wänden aufweist. Die Form soll aus einem Kunststoff, Zellulosematerial oder Metall bestehen. Ihre Innenfläche soll mit einer das Ablösen von der Form erleichternden Schicht so wie Teflon versehen sein. Mittels der Form, an die ein Vakuum angelegt wird, wird eine Kunststofffolie zu einem inneren Tray geformt. Das innere Tray wird mit Hotmelt oder einem anderen Klebstoff befüllt, mit einer Folie abgedeckt und die solchermaßen gebildete Packungseinheit wird aus der Form entnommen:
JPH 10218152 A beschreibt eine Schale mit einem Körper aus einer Zellstoffform mit einer beliebigen Form und einen wasserundurchlässigen Kunststofffilm, der ungefähr an die innere Form des Körpers angepasst ist. Der Kunststofffilm wird im erhitzten und erweichten Zustand des thermoplastischen Kunststofffilms durch Vakuumformen an die Innenform des Behälterkörpers angepasst und eng damit verbunden. Deshalb können sowohl wenig feuchte oder flüssige Inhalte der Verpackung aufgenommen und gelagert werden. Der wasserundurchlässige Film ist leicht nach dem Gebrauch eher aus dem Behälterkörper entnehmbar.

Die WO 00/34567 A2 beschreibt eine absorbierende Struktur umfassend ein dünnes, kalandriertes Airlaid-Komposit und ein Verfahren zum Herstellen des Komposits. Das Airlaid-Komposit ist insbesondere verwendbar für einen Hygieneartikel, beispielsweise ein absorbierendes PET, insbesondere in der Fleisch- und Geflügelindustrie zum Absorbieren von Exsudat in Verpackungen.

Davon ausgehend liegt der Erfindung die Aufgabe zugrunde, ein Verfahren und eine Vorrichtung zum Herstellen eines Behälters und einen Behälter zu schaffen, wobei die Barrierefolie einfacher gezielt von dem Behälter getrennt werden kann und der Behälter besser recycelbar ist.

Die Aufgabe wird durch ein Verfahren mit den Merkmalen von Anspruch 1 gelöst. Vorteilhafte Ausführungsarten des Verfahrens sind in Unteransprüchen angegeben.

Das Verfahren zum Herstellen eines Behälters mit einer Barrierefolie umfasst die folgenden Schritte:
- mindestens ein Formwerkzeug mit einer der Außenform oder der Innenform des Behälters entsprechenden formgebenden Oberfläche wird bereitgestellt,
- vor der formgebenden Oberfläche wird ein zellulosehaltiges Flachmaterial mit einer Beschichtung zum Steuern der Adhäsionswirkung einer Barrierefolie auf der Seite, die von der formgebenden Oberfläche, die der Außenform des

Behälters entspricht, abgewandt ist oder die der formgebenden Oberfläche, die der Innenform des Behälters entspricht, zugewandt ist, bereitgestellt,
- das Flachmaterial wird gegen die formgebende Oberfläche zu einem Pressling mit der Form des Behälters gepresst,
- eine Barrierefolie mit einer durch die Beschichtung des Flachmaterials veränderbaren Adhäsionswirkung wird vor der Innenseite des Presslings bereitgestellt und
- die Barrierefolie wird gegen die Innenseite des Presslings gepresst und damit verbunden.

Bei dem erfindungsgemäßen Verfahren wird ein Flachmaterial aus einem zellulosehaltigen Flachmaterial mit einer Beschichtung auf einer Seite zum Steuern der Adhäsionswirkung einer Barrierefolie bereitgestellt. Je nachdem, ob das Formwerkzeug eine formgebende Oberfläche aufweist, die der Außenform oder der Innenform des Behälters entspricht, wird das Flachmaterial mit der Beschichtung auf der von der formgebenden Oberfläche abgewandten oder auf der der formgebenden Oberfläche zugewandten Seite bereitgestellt. Aus dem Flachmaterial wird mittels des Formwerkzeuges ein Pressling mit der Form eines Behälters hergestellt, der die Beschichtung an der Innenseite aufweist. Gegen die Innenseite des Presslings wird eine Barrierefolie gepresst und mit der Innenseite des Presslings verbunden. Die Innenseite des Presslings ist diejenige Seite, die dem Produkt zugewandt ist, das von dem Behälter aufgenommen werden soll. Somit ist die Barrierefolie auf der Seite des Behälters angeordnet, die dem Produkt zugewandt ist, das in den Behälter eingesetzt werden soll. Die Adhäsionswirkung zwischen Pressling und Barrierefolie wird durch die Beschichtung an der Innenseite des Presslings gesteuert. Mittels der Beschichtung kann die Adhäsionswirkung so eingestellt werden, dass die Barrierefolie hinreichend sicher an dem Pressling fixiert ist, um ein Produkt im Behälter zu lagern, zu transportieren, zu erwärmen, aus dem Behälter zu essen oder zu entnehmen. Gleichzeitig kann mittels der Beschichtung die Adhäsionswirkung so eingestellt werden, dass die Barrierefolie leicht gezielt von dem Pressling aus zellulosehaltigem Flachmaterial abgelöst werden kann, um die Barrierefolie und den Pressling gesondert zu rezyklieren. Durch die Beschichtung kann die Adhäsionswirkung einer bestimmten Barrierefolie an dem Pressling besonders einfach, genau und in einem besonders großen Bereich eingestellt werden. Die Veränderung kann insbesondere in einer Abschwächung gegenüber der Adhäsionswirkung der Barrierefolie an dem Pressling ohne eine Beschichtung bestehen. Umfasst von der Erfindung sind aber auch Ausführungsarten, bei denen die Beschichtung eine Verstärkung der Adhäsionswirkung der Barrierefolie an dem Pressling bewirkt. Die Steuerung der Adhäsionswirkung kann insbesondere dadurch erfolgen, dass die Beschichtung mit unterschiedlichen Schichtstärken und/oder durch Beschichtung nur von Teilflächen des Flachmaterials erfolgt. Von Vorteil ist zudem, dass der Pressling aus zellulosehaltigem Flachmaterial in vielfältigen Formen hergestellt werden kann, zu denen insbesondere Formen mit ebenen Oberflächen und Ecken dazwischen sowie Formen mit einheitlich oder in verschiedener Weise gekrümmten Oberflächen und Rundungen oder Ecken dazwischen gehören. Der Pressling kann ohne überlappende Materialschichten ausgeführt werden, sodass Sprünge an der Oberfläche entfallen, die ein dichtes Verschließen mittels einer Abdeckung erschweren. So kann der Pressling mit einem umlaufenden Flansch mit gleichmäßig flacher Oberseite versehen werden, auf dem eine Abdeckfolie sicher abdichtend auf den Rand der Barrierefolie aufgesiegelt werden kann. Ferner hat der Pressling die Eigenschaft, gasdurchlässig zu sein, sodass durch Anlegen eines Unterdruckes an seiner Außenseite und/oder eines Überdruckes an seiner Innenseite eine Gasströmung von der Innenseite zur Außenseite erzeugt werden kann, welche eine Barrierefolie gleichmäßig an die Innenseite des Presslings anpresst.

Gemäß einer Ausführungsart der Erfindung wird das Flachmaterial in einem trockenen Verfahren hergestellt. Dies ist vorteilhaft für die Herstellung des Behälters durch den Hersteller der darin einzusetzenden Produkte. Alternativ wird das Flachmaterial in einem feuchten Verfahren hergestellt. Der Pressling kann

insbesondere aus einer feuchten Masse aus Zellulosefasern (Faserguss) hergestellt werden, wie es für die Herstellung von Eierkartons verwendet wird.

Ferner kann der Pressling hergestellt werden, wie beschrieben in Larsson, P. A., & Wäckberg, L. (2016, Februar) "Towards Natural-Fibre-based thermoplastic films produced by Conventional Paper-Making, Green chemistry, 18 (11), 3324-333. DUI: 10. 1039/c5gc03068d".

Gemäß einer weiteren Ausführungsart umfasst das Flachmaterial ein Airlaid aus einem zellulosehaltigen Material. Gemäß einer weiteren Ausführungsart enthält das zellulosehaltige Material oder besteht es im Wesentlichen aus Zellulosefasern. Ein trockener Zelluloserohling aus diesem Material wird in einem Formwerkzeug trocken unter erhöhter Temperatur und erhöhtem Druck zu einem Behälter geformt. Hierbei gehen die Zellulosefasern Bindungen miteinander ein, sodass der Behälter eine gute Festigkeit aufweist. In dieser Hinsicht wird Bezug genommen auf das Verfahren und die Vorrichtung zum Herstellen eines zellulosehaltigen Produktes gemäß WO2017/160218 A1.

Gemäß einer weiteren Ausführungsart umfasst das Flachmaterial einen Kern aus einem Airlaid aus einem zellulosehaltigen Material und mindestens einen zellulosehaltigen Vliesstoff oder Papier auf mindestens einer Seite des Kerns. Gemäß einer weiteren Ausführungsart werden das Airlaid und der zellulosehaltige Vliesstoff oder das Papier durch Zusammenpressen miteinander verbunden. Gemäß einer weiteren Ausführungsart werden das Airlaid und der Vliesstoff oder das Papier durch Erwärmung und Zusammenpressen miteinander verbunden. Dies kann in demselben Formwerkzeug geschehen, in dem der Pressling gebildet wird. Hierbei können Bindungen zwischen den Fasern des Airlaids und des Vliesstoffes oder Papiers gebildet werden. Die Verbindung kann durch Erwärmen und Erhitzen auch außerhalb des Formwerkzeuges erfolgen, insbesondere wenn das Flachmaterial nicht inline mit den Behältern hergestellt wird. Ferner ist es möglich, das Airlaid und den Vliesstoff oder das Papier durch Einbringen von Klebstoff miteinander zu verbinden.

Der Vliesstoff oder das Papier stabilisiert das Flachmaterial. Gemäß einer weiteren Ausführungsart ist die Beschichtung auf einer Seite des Vliesstoffes oder Papiers aufgebracht. Durch Aufbringen auf dem Vliesstoff oder Papier kann einem Eindringen der Beschichtung in das Flachmaterial entgegengewirkt werden, welches die Beeinflussung der Adhäsionswirkung abschwächt. Gemäß einer weiteren Ausführungsart wird die Beschichtung auf dem Vliesstoff oder Papier aufgebracht, bevor dieser oder dieses auf das Airlaid aufgebracht wird. Das Aufbringen der Beschichtung auf dem zellulosehaltigen Vliesstoff oder dem Papier ist wegen der geringeren Nachgiebigkeit und Durchlässigkeit des Vliesstoffes oder Papiers vorteilhaft gegenüber einem Aufbringen auf das Airlaid, insbesondere wenn die Beschichtung aufgedruckt wird. Gemäß einer anderen Ausführungsart ist die Beschichtung direkt auf eine Seite des Airlaids aufgebracht.

Gemäß einer weiteren Ausführungsart wird das Flachmaterial durch Ausbilden des Airlaids auf einem ersten zellulosehaltigen Vliesstoff oder Papier und durch Aufbringen eines zweiten zellulosehaltigen Vliesstoffes oder Papiers auf das Airlaid gebildet. Bei Verwendung dieses Flachmaterials wird sowohl die Außenseite als auch die Innenseite des Presslinges von einem zellulosehaltigen Vliesstoff gebildet.

Gemäß einer weiteren Ausführungsart ist die Beschichtung oder umfasst die Beschichtung ein Silikonöl oder ein anderes silikonhaltiges Material, ein Wachs, ein Fett oder ein anderes Trennmittel.

Gemäß einer weiteren Ausführungsart wird die Beschichtung in einem Muster aufgebracht, das beschichtete Bereiche und unbeschichtete Bereiche umfasst. Durch die jeweilige Ausbildung des Musters kann die Adhäsionswirkung einfach gesteuert werden. Die Beschichtung wird beispielsweise in einem Wabenmuster aufgebracht.

Dabei kann die Beschichtung streifenförmig entlang der sechs Seiten von Waben aufgebracht werden. Die Stärke der Adhäsionswirkung kann durch die Breite der Streifen gesteuert werden. Gemäß einem anderen Beispiel wird die Beschichtung in einem Punkteraster aufgetragen. Hierbei kann es sich beispielsweise um kreisförmige Punkte handeln. Zur Beeinflussung der Adhäsionswirkung können die Abstände der Zentren benachbarter Punkte, die Größen der Punkte und/oder die Flächendichte der Punkte variiert werden.

Gemäß einer weiteren Ausführungsart wird die Beschichtung auf das Flachmaterial oder eine Lage des Flachmaterials, insbesondere den Vliesstoff oder das Papier, aufgedruckt. Zusätzlich zu der Beschichtung können Informationen, Designs, Herstellerangaben, Marken usw. auf dem Flachmaterial aufgedruckt werden. Durch Aufdrucken wird eine besonders einfache und präzise Beschichtung ermöglicht. Das Aufdrucken kann insbesondere durch Flexodruck, Rotationstiefdruck, Siebdruck, Offsetdruck oder Digitaldruck erfolgen. Alternativ wird die Beschichtung mittels einer oder mehrerer Düsen auf das Flachmaterial oder eine Lage des Flachmaterials aufgebracht.

Barrierefolien im Sinne der vorliegenden Anmeldung bezeichnen beliebige Ein- oder mehrlagige Folien aus Kunststoff und/oder Metall, die die Eigenschaft haben, den Durchgang eines oder mehrerer der nachfolgenden Medien Gas, Wasserdampf, Aroma, Fett oder Flüssigkeit zeitweilig oder dauerhaft einzuschränken oder zu verhindern. Insbesondere sind von dem Begriff "Barrierefolie" Folien umfasst, die beim MAP für Lebensmittel verwendet werden.

Gemäß einer weiteren Ausführungsart umfasst die Barrierefolie mindestens eine Lage aus einem der nachfolgenden Materialien: PET, PLA, EVOH, PA, PPT, PP, PE. Gemäß einer weiteren Ausführungsart wird die Barrierefolie unter erhöhter Temperatur an die Innenoberfläche des Presslings angepresst. Hierdurch kann eine plastische Verformung der Barrierefolie und damit eine Anpassung an die Innenoberfläche des Presslings erleichtert werden. Grundsätzlich ist aber auch möglich, die Barrierefolie allein durch Anpressen plastisch zu verformen und die Innenoberfläche des Presslings gleichmäßig auszukleiden.

Gemäß einer weiteren Ausführungsart ist die Barrierefolie aus mindestens einem Biopolymer hergestellt. Hierbei handelt es sich um einen nachwachsenden Rohstoff und/oder um einen kompostierbaren Rohstoff.

Gemäß einer weiteren Ausführungsart ist die Barrierefolie auf die Innenoberfläche des Presslings aufgesiegelt. Das Aufsiegeln kann durch Anwenden von Temperatur und Druck auf die Barrierefolie erfolgen. Zum Aufsiegeln kann die Barrierefolie einen Klebstoff umfassen, der durch Druck und Wärme (Heißsiegeln) oder mit kalten Werkzeugen (Kaltsiegeln) unter Druck aktiviert wird.

Gemäß einer weiteren Ausführungsart wird die Adhäsionswirkung der Barrierefolie, die zumindest an einer Seite eine Lage aus einem thermoplastischen Material aufweist, durch Erwärmen und Plastifizieren des thermoplastischen Materials sowie Abkühlen in Kontakt mit dem Pressling erzeugt. Gemäß einer weiteren Ausführungsart wird auf die Barrierefolie, bevor die Barrierefolie auf den Pressling aufgebracht wird, ein chemisch härtender oder physikalisch abbindender Klebstoff aufgebracht. Durch Aushärten oder Abbinden des Klebstoffes wird die auf den Pressling aufgebrachte Barrierefolie mit diesem verbunden.

Gemäß einer weiteren Ausführungsart wird ein Pressling mit einem umlaufenden Flansch hergestellt. Gemäß einer weiteren Ausführungsart wird die Barrierefolie gegen die Innenseite des Presslings und gegen die Oberseite des Flansches gepresst und damit verbunden.

Gemäß einer weiteren Ausführungsart ist die formgebende Oberfläche des Formwerkzeuges über mindestens eine Saugöffnung und mindestens einen Vakuumkanal mit einem Vakuumerzeuger verbunden und wird über die Öffnung mittels der Vakuumquelle ein Unterdruck an die Außenseite des Presslings angelegt, der die Barrierefolie an die Innenoberfläche des Presslings ansaugt.

Gemäß einer weiteren Ausführungsart wird ein Druck an die Außenseite der Barrierefolie angelegt, indem diese mittels eines Presswerkzeuges mit einer an die Innenoberfläche des Presslings angepassten oder anpassbaren äußeren Form gegen die Innenoberfläche des Presslings gepresst wird. Das Presswerkzeug kann eine starre äußere Form haben, die an die Innenoberfläche des Presslings angepasst ist. Es kann aber auch ein elastisch aufweitbarer Körper sein, der mit einer Flüssigkeit oder einem Gas füllbar ist, um die Barrierefolie gleichmäßig gegen die Innenoberfläche des Presslings zu pressen. Gemäß einer weiteren Ausführungsart wird mittels Druckluft ein Überdruck an die Außenseite der Barrierefolie angelegt, der diese an die Innenoberfläche des Presslings andrückt. Der Überdruck kann z. B. mittels des Presswerkzeuges angelegt werden, das hierfür mindestens eine Austrittsöffnung für Druckluft aufweist, die über mindestens einen Druckluftkanal mit einer Druckluftquelle verbunden ist. Beim Anpressen der Barrierefolie an den Pressling kann die Luft zwischen Barrierefolie und Pressling aufgrund der Gasdurchlässigkeit des Presslings entweichen.

Gemäß einer weiteren Ausführungsart ist das Formwerkzeug und/oder das Presswerkzeug beheizt. Durch Beheizen des Formwerkzeuges und/oder des Presswerkzeuges kann eine erhöhte Temperatur erzeugt werden, um die Barrierefolie plastisch zu verformen und/oder auf die Innenoberfläche des Presslings aufzusiegeln.

Gemäß einer weiteren Ausführungsart wird der Pressling mittels eines ersten Formwerkzeuges gebildet, von dem ersten Formwerkzeug getrennt und mittels eines zweiten Formwerkzeuges die Barrierefolie gegen den Pressling gepresst aufgebracht. Das Anpressen der Barrierefolie gegen den Pressling erfolgt vorzugsweise durch Anlegen eines Vakuums an die Unterseite des Presslings. Infolgedessen wird die Barrierefolie durch den an ihrer Außenseite herrschenden Normaldruck gegen den Pressling gepresst. Beim Aufbringen der Barrierefolie kann das erste Formwerkzeug für das Herstellen eines weiteren Presslings genutzt werden. Ferner kann das erste Formwerkzeug für das Herstellen des Presslings und das zweite Formwerkzeug für das Anbringen der Barrierefolie optimiert werden. Grundsätzlich ist es aber auch möglich, mit dem Formwerkzeug, mittels dem der Pressling gepresst wird, die Barrierefolie auf die Innenseite des Presslings aufzubringen.

Gemäß einer weiteren Ausführungsart wird bei dem oder nach dem Pressen des Presslings ein randseitig über die formgebende Oberfläche vorstehender Teil des Flachmaterials abgetrennt.

Gemäß einer weiteren Ausführungsart wird beim oder nach dem Anpressen der Barrierefolie an den Pressling ein über den äußeren Rand des Presslings überstehender äußerer Teil der Barrierefolie abgetrennt. Hierdurch kann eine ursprünglich bahnförmige oder blattförmige Barrierefolie nach dem Anpressen an die Innenoberfläche des Presslings an den Verlauf seines äußeren Randes angepasst werden.

Gemäß einer weiteren Ausführungsart wird beim Abtrennen des äußeren Teils der Barrierefolie am äußeren Rand des Presslings ein nach außen vorstehender erster Angreifer der Barrierefolie stehengelassen. Der erste Angreifer kann verwendet werden, um nach dem Gebrauch des Behälters die Barrierefolie von dem Pressling zu trennen und Pressling und Barrierefolie getrennt zu recyceln.

Gemäß einer weiteren Ausführungsart wird der überstehende Teil der Barrierefolie mittels eines Stanzwerkzeuges abgetrennt. Das Stanzwerkzeug kann zugleich als Presswerkzeug zum Anpressen der Barrierefolie an die Innenoberfläche des Presslings ausgebildet sein.

Gemäß einer weiteren Ausführungsart wird der mit Barrierefolie ausgekleidete Pressling mit einem Produkt gefüllt und mit einer Abdeckung geschlossen. Bei dem Produkt kann es sich insbesondere um Lebensmittel handeln, die in einer Schutzgasatmosphäre und/oder geschützt vor dem Austritt von Fett gelagert werden müssen.

Gemäß einer weiteren Ausführungsart wird eine Abdeckfolie als Abdeckung umlaufend auf den oberen Rand der Barrierefolie aufgesiegelt oder aufgeklebt. Beim Aufsiegeln oder Aufkleben können Abdeckfolie und Barrierefolie unter Anwendung von Druck und Temperatur lösbar miteinander verschmolzen werden. Ferner ist es möglich, Abdeckfolie und Barrierefolie durch Anwendung eines Siegellackes oder Klebstoffes lösbar miteinander zu verbinden.

Gemäß einer weiteren Ausführungsart wird beim Aufsiegeln oder Aufkleben ein über die Barrierefolie überstehender äußerer Teil der Abdeckfolie abgetrennt. Hierdurch kann eine bahnförmige oder blattförmige Abdeckfolie an den äußeren Rand des Presslings angepasst werden.

Gemäß einer weiteren Ausführungsart wird beim Abtrennen des äußeren Teils der Abdeckfolie ein am äußeren Rand des Presslings nach außen von der Abdeckfolie vorstehender zweiter Angreifer der Abdeckfolie stehengelassen. Durch Greifen des zweiten Angreifers mit der Hand kann die Abdeckfolie von der Barrierefolie abgetrennt werden. Wenn die Barrierefolie einen ersten Angreifer aufweist, kann hierbei mit der einen Hand der erste Angreifer und mit der anderen Hand der zweite Angreifer gegriffen werden, um die Abdeckfolie von der Barrierefolie abzuziehen, ohne diese von dem Pressling zu lösen. Nach dem Entleeren des Behälters kann der erste Angreifer benutzt werden, um die Barrierefolie von dem Pressling zu trennen.

Gemäß einer weiteren Ausführungsart wird eine Schale (z.B. eine Schale für Aufschnitt (z.B. Käse oder Wurst), eine Schale für (unter Schutzatmosphäre verpacktes) Frischfleisch, eine Schale für Fertiggerichte (Menüschale) oder Suppen, eine Schale für Obst oder Gemüse), eine Haubenschale (z.B. für Burger), ein Teller, eine Tasse oder ein Becher hergestellt.

Ferner wird die Aufgabe durch eine Vorrichtung mit Mitteln zum Durchführen der Schritte des Verfahrens gemäß einem der Ansprüche 1 bis 22 oder einer der zuvor angeführten weiteren Ausführungsarten des Verfahrens gelöst.

Ferner wird die Aufgabe durch einen Behälter mit den Merkmalen von Anspruch 23 gelöst. Vorteilhafte Ausführungsarten des Behälters sind in Unteransprüchen angegeben.

Der Behälter mit einer Barrierefolie umfasst die folgenden Merkmale:
- einen Pressling aus einem zellulosehaltigen Flachmaterial mit einer Beschichtung zum Steuern der Adhäsionswirkung einer Barrierefolie auf der Innenseite und
- eine an der Innenseite des Presslings anliegende und mit dieser verbundene Barrierefolie mit einer durch die Beschichtung des Flachmaterials veränderten Adhäsionswirkung.

Dem Behälter kommen die mit dem Verfahren zum Herstellen des Behälters verbundenen vorteilhaften Wirkungen entsprechend zu. Dies gilt auch für die nachfolgenden Ausführungsarten des Behälters.

Gemäß einer Ausführungsart der Erfindung ist der Pressling aus einem Flachmaterial mit einem Kern aus einem Airlaid aus einem zellulosehaltigen Material und mindestens einem zellulosehaltigen Vliesstoff oder Papier auf mindestens einer Seite des Kerns gepresst.

Gemäß einer weiteren Ausführungsart weist der Pressling die Beschichtung zum Steuern der Adhäsionswirkung auf einem Vliesstoff oder Papier auf, der oder das auf der Innenseite des Behälters angeordnet ist.

Gemäß einer weiteren Ausführungsart ist oder umfasst die Beschichtung ein Silikonöl oder ein anderes silikonhaltiges Material, ein Wachs, ein Fett oder ein anderes Trennmittel.

Gemäß einer weiteren Ausführungsart ist die Beschichtung in einem Muster aufgebracht, das beschichtete Bereiche und unbeschichtete Bereiche umfasst.

Gemäß einer weiteren Ausführungsart ist die Beschichtung in einem Wabenmuster oder einem Punkteraster aufgebracht.

Gemäß einer weiteren Ausführungsart umfasst die Barrierefolie mindestens eine Lage aus einem der nachfolgenden Materialien: PET, PLA, EVOH, PA, PBT, PP, PE.

Gemäß einer weiteren Ausführungsart weist der Pressling einen umlaufenden Flansch auf.

Gemäß einer weiteren Ausführungsart ist die Barrierefolie mit der Oberseite des Flansches verbunden.

Gemäß einer weiteren Ausführungsart weist der Behälter eine Abdeckung auf.

Gemäß einer weiteren Ausführungsart ist die Abdeckung eine umlaufend auf den äußeren Rand der Barrierefolie aufgesiegelte oder aufgeklebte Abdeckfolie.

Gemäß einer weiteren Ausführungsart weist die Barrierefolie am äußeren Rand des Presslings einen nach außen vorstehenden ersten Angreifer auf und/oder weist die Abdeckfolie einen am äußeren Rand des Presslings seitlich vorstehenden zweiten Angreifer auf und sind die Barrierefolie und die Abdeckfolie im Bereich des ersten Angreifers und des zweiten Angreifers nicht miteinander verbunden sind.

Gemäß einer weiteren Ausführungsart ist der Behälter eine Schale (z.B. eine Schale für Aufschnitt (z.B. Käse oder Wurst), eine Schale für (unter Schutzatmosphäre verpacktes) Frischfleisch, eine Schale für Fertiggerichte (Menüschale) oder Suppen, eine Schale für Obst oder Gemüse), eine Haubenschale (z.B. für Burger), ein Teller, eine Tasse oder ein Becher.

Die Erfindung wird nachfolgend anhand der anliegenden Zeichnungen eines Ausführungsbeispieles näher erläutert. In den Zeichnungen zeigen:
- Fig. 1A und B: einen als Schale ausgebildeten Behälter in der Draufsicht (Fig. 1A) und einem Schnitt entlang der Linie 1B-1B (Fig. 1B);
- Fig. 2: eine Vorrichtung zum Herstellen der Schale in einem grob schematischen Längsschnitt.

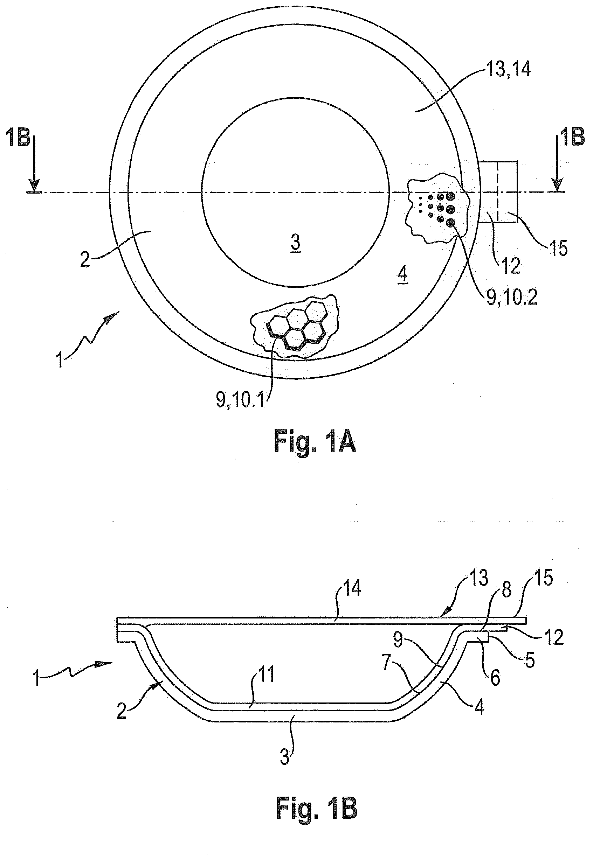

Gemäß Fig. 1 umfasst eine Schale 1 einen Pressling 2 auf der Basis von Zellulose, der einen im Wesentlichen flachen Boden 3, eine gekrümmte, umlaufende Seitenwand 4 und einen umlaufenden äußeren Rand 5 an einem nach außen vorstehenden Flansch 6 aufweist. Der Pressling 2 hat an der Innenseite 7 des Bodens 3 und der Seitenwand 4 sowie an der Oberseite 8 des Flansches 6 eine Beschichtung 9 mit einer Wabenstruktur 10.1 oder in Form eines Punktemusters 10.2 (jeweils teilweise in Fig. 1A gezeigt). Auf die Innenseite 7 und die Oberseite 8 ist flächig und glatt anliegend eine Barrierefolie 11 aufgeklebt. Die Barrierefolie 11 hat einen seitlich vom äußeren Rand 5 nach außen vorstehenden ersten Angreifer 12.

Die Schale 1 ist oben mittels einer Abdeckung 13 in Form einer Abdeckfolie 14 verschlossen. Die Abdeckfolie 14 ist oberhalb des äußeren Randes 5 des Presslings 2 auf den äußeren Rand der Barrierefolie 11 aufgesiegelt. Dort weist die Abdeckfolie 14 oberhalb des ersten Angreifers 12 einen nach außen vorstehenden zweiten Angreifer 15 auf. Der zweite Angreifer 15 steht etwas weiter nach außen vor, als der erste Angreifer 12. Der erste Angreifer 12 und der zweite Angreifer 15 sind nicht miteinander verbunden. Alternativ kann der zweite Angreifer 15 seitlich versetzt zu dem ersten Angreifer 12 angeordnet sein. Der zweite Angreifer 15 kann dann bequem gegriffen werden, auch wenn er nicht weiter als der erste Angreifer 12 vom äußeren Rand 5 des Presslings 2 vorsteht.

Innerhalb der Schale 1 kann unter Schutzgas Lebensmittel oder ein anderes Produkt gelagert werden, insbesondere feuchtehaltiges Lebensmittel, z.B. Fleisch mit einer Sauce.

Zum Entnehmen des Produktes kann zuerst der zweite Angreifer 15 gegriffen und vom ersten Angreifer 12 hochgeklappt, dann der erste Angreifer 12 festgehalten und die Abdeckfolie 14 von der Barrierefolie 11 abgezogen werden. Nach Entleeren der Schale 1 kann der erste Angreifer 12 gegriffen und die Barrierefolie 11 von dem Pressling 2 abgezogen werden.

Durch die Beschichtung 9 ist die Adhäsionswirkung der Barrierefolie 11 bezüglich des Presslings 2 so verändert, vorzugsweise so abgeschwächt, dass die Barrierefolie 11 von dem Pressling 2 leicht durch Ziehen an dem ersten Angreifer 12 abgezogen werden kann. Die Adhäsionswirkung ist jedoch mindestens so groß, dass die Barrierefolie 12 fest mit dem Pressling 2 verbunden bleibt, wenn die Schale 1 den typischen Belastungen beim Befüllen mit Produkt, Transportieren des Produktes und bei der Entnahme des Produktes unterworfen ist.

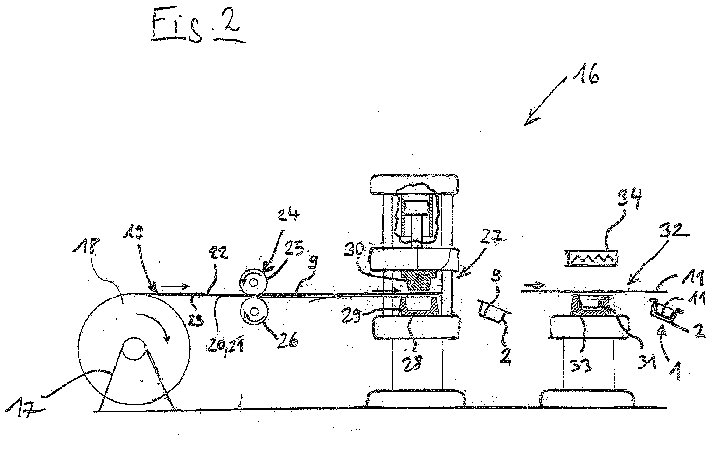

Gemäß Fig. 2 wird zur Herstellung der Schale 1 eine Vorrichtung 16 verwendet. Diese umfasst eine erste Lagervorrichtung 17 für eine erste Rolle 18, auf der ein Flachmaterial 19 gelagert ist, das einen Kern 20 aus einem Airlaid 21 und auf beiden Seiten einen Vliesstoff 22, 23 (oder alternativ ein Papier) aufweist. Auf dem Vliesstoff 22 ist eine Beschichtung 9 aufgedruckt, die im einfachsten Fall gleichmäßig über die Oberfläche des Vliesstoffes 22 verteilt ist.

Zur Herstellung der Schale 1 ist die Beschichtung in Form einer Wabenstruktur 10.1 oder einem Punkteraster 10.2 mit einer bestimmten Verteilung über der Oberfläche des Vliesstoffes 22 aufgebracht.

Das Flachmaterial 19 wird mittels einer Zuführvorrichtung 24 mit angetriebenen Zuführwalzen 25, 26 einem ersten Formwerkzeug 27 zugeführt, in dem es an einer formgebenden Oberfläche 28 einer Kavität 29 mittels eines Pressstempels 30 zu schalenförmigen Presslingen 2 geformt und die Presslinge 2 ausgestanzt werden. Mittels nicht gezeigter Einrichtungen wird das Flachmaterial 19 so über der formgebenden Oberfläche 28 ausgerichtet, dass die Beschichtung im Pressling 2 gemäß der in Fig. 1 gezeigten Verteilung angeordnet ist, d.h. mit radial nach außen zunehmender Dichte in der Fläche. In den Presslingen 2 ist der Vliesstoff 22 und damit die Beschichtung 9 an den Innenseiten des Bodens 3 und der Seitenwand 4 und an der Oberseite 8 des Flansches 6 angeordnet.

Die Presslinge 2 werden anschließend in eine Kavität 31 eines zweiten Formwerkzeuges 32 eingesetzt, deren Innenoberfläche 33 der Außenoberfläche der Presslinge 2 entspricht. Oberhalb des Presslings 2 wird eine Barrierefolie 11 angeordnet. Oberhalb der Barrierefolie 11 ist eine Heizeinrichtung 34 angeordnet, welche die Barrierefolie 11 auf Erweichungstemperatur erhitzt.

Die Barrierefolie 11 wird durch Anlegen eines Vakuums an die Kavität 31 von unten an die Innenoberfläche des Presslings 2 angesaugt. Der Pressling 2 ist so ausgebildet, dass er hierfür eine hinreichende Gasdurchlässigkeit aufweist. Gegebenenfalls wird dies durch Mikroperforationen unterstützt, die beispielsweise mittels eines geeigneten Formwerkzeuges 27 in den Boden 3 des Presslinges 2 eingebracht werden. Durch das Vakuum an der Unterseite der Barrierefolie 11 und den Normaldruck an der Oberseite der Barrierefolie 11 wird diese an die Innenoberfläche des Presslings 2 angepresst und aufgrund der Erwärmung mit dem Pressling 2 verklebt. Durch die Beschichtung 9 wird die Adhäsionswirkung der Barrierefolie 11 an dem Pressling 2 eingestellt.

Das Formwerkzeug 32 kann gleichzeitig als Stanzwerkzeug ausgebildet sein, sodass es beim Kaschieren der Barrierefolie 11 auf den Pressling 2 den über den äußeren Rand 5 des Presslings 2 überstehenden Teil der Barrierefolie 11 abtrennt. Hierbei kann das Stanzwerkzeug so ausgebildet sein, dass ein erster Angreifer 12 aus der Barrierefolie 11 vom äußeren Rand 5 des Presslings 2 vorsteht.

Anschließend kann die Schale mit Produkt befüllt und durch Aufsiegeln der Abdeckfolie 14 geschlossen werden.

### Bezugszeichenliste

- 1: Schale
- 2: Pressling
- 3: Boden
- 4: Seitenwand
- 5: äußerer Rand
- 6: Flansch
- 7: Innenseite
- 8: Oberseite
- 9: Beschichtung
- 10.1: Wabenstruktur
- 10.2: Punkteraster
- 11: Barrierefolie
- 12: erster Angreifer
- 13: Abdeckung
- 14: Abdeckfolie
- 15: zweiter Angreifer
- 16: Vorrichtung
- 17: Lagervorrichtung
- 18: erste Rolle
- 19: Flachmaterial
- 20: Kern
- 21: Airlaid
- 22, 23: Vliesstoff
- 24: Zuführvorrichtung
- 25,26: Zuführwalzen
- 27: Formwerkzeug
- 28: formgebende Oberfläche
- 29: Kavität
- 30: Pressstempel
- 31: Kavität
- 32: zweites Formwerkzeug
- 33: Innenoberfläche
- 34: Heizeinrichtung

## Patentansprüche

1. Verfahren zum Herstellen eines Behälters mit einer Barrierefolie umfassend die folgenden Schritte:
• mindestens ein Formwerkzeug (27) mit einer der Außenform oder der Innenform des Behälters (1) entsprechenden formgebenden Oberfläche (28) wird bereitgestellt,
• vor der formgebenden Oberfläche (28) wird ein zellulosehaltiges Flachmaterial (19) mit einer Beschichtung (9) zum Steuern der Adhäsionswirkung einer Barrierefolie (11) auf der Seite, die von der formgebenden Oberfläche (28) die der Außenform des Behälters (1) entspricht, abgewandt ist oder die der formgebenden Oberfläche (28), die der Innenform des Behälters (1) entspricht, zugewandt ist, bereitgestellt,
• das Flachmaterial (19) wird gegen die formgebende Oberfläche (28) zu einem Pressling (2) mit der Form des Behälters (1) gepresst,
• eine Barrierefolie mit einer durch die Beschichtung (9) des Flachmaterials (19) veränderbaren Adhäsionswirkung wird vor der Innenseite des Presslings (2) bereitgestellt und
• die Barrierefolie (11) wird gegen die Innenseite des Presslings (2) gepresst und damit verbunden.

2. Verfahren nach Anspruch 1, bei dem das Flachmaterial (19) einen Kern (20) aus einem Airlaid (21) aus einem zellulosehaltigen Material, mindestens einen zellulosehaltigen Vliesstoff (22, 23) oder Papier auf mindestens einer Seite des Kerns (20) und eine auf den Vliesstoff (22, 23) oder das Papier aufgebrachte Beschichtung (9) umfasst.

3. Verfahren nach Anspruch 1 oder 2, bei dem das Flachmaterial (19) durch Ausbilden des Airlaids (21) auf einem ersten zellulosehaltigen Vliesstoff (23) oder Papier und durch Aufbringen eines zweiten zellulosehaltigen Vliesstoffes (22) oder Papiers auf dem Airlaid (21) gebildet wird.

4. Verfahren nach Anspruch 2 oder 3, bei dem die Beschichtung (9) auf den Vliesstoff (22) oder das Papier aufgebracht wird, bevor dieser oder dieses und das Airlaid (21) übereinandergelegt werden.

5. Verfahren nach einem der Ansprüche 1 bis 4, bei dem die Beschichtung (9) ein Silikonöl oder ein anderes silikonhaltiges Material, ein Wachs, ein Fett oder ein anderes Trennmittel ist oder umfasst.

6. Verfahren nach einem der Ansprüche 1 bis 5, bei dem die Beschichtung (9) in einem Muster aufgebracht wird, das beschichtete Bereiche und unbeschichtete Bereiche umfasst.

7. Verfahren nach einem der Ansprüche 1 bis 6, bei dem die Barrierefolie (11) mindestens eine Lage aus einem der nachfolgenden Materialien umfasst: PET, PLA, EVOH, PA, PBT, PP, PE.

8. Verfahren nach einem der Ansprüche 1 bis 7, bei dem ein Pressling (2) mit einem umlaufenden Flansch (6) hergestellt wird und die Barrierefolie (11) gegen die Oberseite (8) des Flansches (6) gepresst und damit verbunden wird.

9. Verfahren nach einem der Ansprüche 1 bis 8, bei dem die Barrierefolie (11) durch Anlegen von Unterdruck an die dem Pressling (2) zugewandte Seite der Barrierefolie (11) und/oder durch Anlegen von Druck an die vom Pressling (2) abgewandte Seite der Barrierefolie (11) an den Pressling (2) angepresst wird.

10. Verfahren nach einem der Ansprüche 1 bis 9, bei dem die Barrierefolie (11) erwärmt und an den Pressling (2) angepresst wird.

11. Verfahren nach einem der Ansprüche 1 bis 10, bei dem der Pressling (2) mittels eines ersten Formwerkzeuges (27) gebildet wird, der Pressling (2) von dem ersten Formwerkzeug (27) getrennt und mittels eines zweiten Formwerkzeuges (32) die Barrierefolie (11) gegen den Pressling (2) gepresst wird.

12. Verfahren nach einem der Ansprüche 1 bis 11, bei dem der mit Barrierefolie (11) verbundene Pressling (2) mit einem Produkt gefüllt und mit einer Abdeckung (13) geschlossen wird.

13. Verfahren nach einem der Ansprüche 1 bis 12 bei dem eine Abdeckfolie (14) als Abdeckung (13) umlaufend auf den äußeren Rand der Barrierefolie (11) aufgesiegelt oder aufgeklebt wird.

14. Verfahren nach einem der Ansprüche 1 bis 13, bei dem bei oder nach dem Pressen des Presslings (2) ein randseitig über die formgebende Oberfläche (28) vorstehender Teil des Flachmaterials (19) abgetrennt wird und/oder bei dem bei oder nach dem Anpressen der Barrierefolie (11) an den Pressling (2) ein über den äußeren Rand des Presslings (2) überstehender äußerer Teil der Barrierefolie (11) abgetrennt wird und/oder bei dem beim oder nach dem Aufsiegeln oder Aufkleben ein über die Barrierefolie (11) überstehender äußerer Teil der Abdeckfolie (14) abgetrennt wird.

15. Verfahren nach Anspruch 14, bei dem beim Abtrennen des äußeren Teils der Barrierefolie (11) am äußeren Rand des Presslings ein nach außen von der Barrierefolie (11) vorstehender erster Angreifer (12) der Barrierefolie (11) stehengelassen wird und/oder bei dem beim Abtrennen des äußeren Teils der Abdeckfolie (14) ein am äußeren Rand des Presslings (2) nach außen von der Abdeckfolie (14) vorstehender zweiter Angreifer (15) der Abdeckfolie (14) stehengelassen wird.

16. Behälter mit einer Barrierefolie umfassend die folgenden Merkmale:
• ein (2) Pressling aus einem zellulosehaltigen Flachmaterial (19) mit einer Beschichtung (9) zum Steuern der Adhäsionswirkung einer Barrierefolie (11) auf der Innenseite und
• eine an der Innenseite des Presslings (2) anliegende und mit dieser verbundene Barrierefolie (11) mit einer durch die Beschichtung des Flachmaterials (19) veränderten Adhäsionswirkung.

17. Behälter nach Anspruch 16, bei dem der Pressling (2) aus einem Flachmaterial (19) mit einem Kern (20) aus einem Airlaid (21) aus einem zellulosehaltigen Material, mindestens einem zellulosehaltigen Vliesstoff (22, 23) oder Papier auf mindestens einer Seite des Kerns (20) und der Beschichtung (9) zum Steuern der Adhäsionswirkung auf dem Vliesstoff (22) oder Papier gepresst ist.

18. Behälter nach Anspruch 16 oder 17, bei dem die Beschichtung (9) ein Silikonöl oder ein anderes silikonhaltiges Material, ein Wachs, ein Fett oder ein anderes Trennmittel ist.

19. Behälter nach einem der Ansprüche 16 bis 18, bei dem die Beschichtung (9) in einem Muster aufgebracht ist, dass beschichtete und unbeschichtete Bereiche aufweist.

20. Behälter nach einem der Ansprüche 16 bis 19, bei dem die Barrierefolie (11) mindestens eine Lage aus einem der nachfolgenden Materialien umfasst: PET, PLA, EVOH, PA, PBT, PP, PE.

21. Behälter nach an der Ansprüche 16 bis 20, bei dem der Pressling (2) einen umlaufenden Flansch (6) aufweist und die Barrierefolie (11) mit der Oberseite (8) des Flansches (6) verbunden ist.

22. Behälter nach einem der Ansprüche 16 bis 21, der eine Abdeckung (13) aufweist, die vorzugsweise eine umlaufend auf den äußeren Rand der Barrierefolie (11) aufgesiegelte oder aufgeklebte Abdeckfolie (14) ist.

23. Behälter nach einem der Ansprüche 16 bis 22, bei dem die Barrierefolie (11) am äußeren Rand des Presslings (2) einen nach außen vorstehenden ersten Angreifer (12) aufweist und/oder die Abdeckfolie (14) einen am äußeren Rand des Presslings (2) seitlich vorstehenden zweiten Angreifer (15) aufgreift und die Barrierefolie und die Abdeckfolie (14) im Bereich des ersten Angreifers (12) und des zweiten Angreifers (15) nicht miteinander verbunden sind.

24. Behälter nach einem der Ansprüche 16 bis 23, der eine Schale (2), eine Haubenschale, ein Teller, eine Tasse oder ein Becher ist.

## Claims

1. A method for producing a container having a barrier film, comprising the following steps:
• at least one molding tool (27) having a shaping surface (28) corresponding to the outer shape or the inner shape of the container (1) is provided,
• in front of the shaping surface (28), a cellulose-containing flat material (19), which has a coating (9) for controlling the adhesive effect of a barrier film (11) on the side which faces away from the shaping surface (28) corresponding to the outer shape of the container (1) or which faces the shaping surface (28) corresponding to the inner shape of the container (1), is provided,
• the flat material (19) is pressed against the shaping surface (28) to form a pressed part (2) having the shape of the container (1),
• a barrier film having an adhesive effect which can be modified by the coating (9) of the flat material (19) is provided in front of the inside of the pressed part (2), and
• the barrier film (11) is pressed against the inside of the pressed part (2) and connected therewith.

2. The method according to Claim 1, in which the flat material (19) comprises a core (20) made of an airlaid (21) made of a cellulose-containing material, at least one cellulose-containing non-woven fabric (22, 23) or paper on at least one side of the core (20), and a coating (9) applied to the non-woven fabric (22, 23) or the paper.

3. The method according to Claim 1 or 2, in which the flat material (19) is formed by configuring the airlaid (21) on a first cellulose-containing non-woven fabric (23) or paper and by applying a second cellulose-containing non-woven fabric (22) or paper on the airlaid (21).

4. The method according to Claim 2 or 3, in which the coating (9) is applied to the non-woven fabric (22) or the paper before said non-woven fabric or said paper and the airlaid (21) are laid above one another.

5. The method according to any one of Claims 1 to 4, in which the coating (9) is or comprises a silicone oil or another silicone-containing material, a wax, a grease or another release agent.

6. The method according to any one of Claims 1 to 5, in which the coating (9) is applied in a pattern which comprises coated regions and uncoated regions.

7. The method according to any one of Claims 1 to 6, in which the barrier film (11) comprises at least one layer made of one of the following materials: PET, PLA, EVOH, PA, PBT, PP, PE.

8. The method according to any one of Claims 1 to 7, in which a pressed part (2) having a circumferential flange (6) is produced and the barrier film (11) is pressed against the top (8) of the flange (6) and connected therewith.

9. The method according to any one of Claims 1 to 8, in which the barrier film (11) is pressed onto the pressed part (2) by applying negative pressure to the side of the barrier film (11) facing the pressed part (2) and/or by applying pressure to the side of the barrier film (11) facing away from the pressed part (2).

10. The method according to any one of Claims 1 to 9, in which the barrier film (11) is heated and pressed onto the pressed part (2).

11. The method according to any one of Claims 1 to 10, in which the pressed part (2) is formed by means of a first molding tool (27), the pressed part (2) is separated from the first molding tool (27) and the barrier film (11) is pressed against the pressed part (2) by means of a second molding tool (32).

12. The method according to any one of Claims 1 to 11, in which the pressed part (2) connected to the barrier film (11) is filled with a product and closed with a cover (13).

13. The method according to any one of Claims 1 to 12, in which a cover film (14) is sealed or glued circumferentially onto the outer edge of the barrier film (11) as a cover (13).

14. The method according to any one of Claims 1 to 13, in which, during or after the pressing of the pressed part (2), a part of the flat material (19) which protrudes at the edge over the shaping surface (28) is separated and/or in which, during or after the pressing of the barrier film (11) onto the pressed part (2), an outer part of the barrier film (11) which projects over the outer edge of the pressed part (2) is separated, and/or in which, during or after the sealing or gluing, an outer part of the cover film (14) which projects over the barrier film (11) is separated.

15. The method according to Claim 14, in which, during the separation of the outer part of the barrier film (11) at the outer edge of the pressed part, a first gripper (12) of the barrier film (11), which protrudes outwardly from the barrier film (11), is left behind and/or in which, during the separation of the outer part of the cover film (14), a second gripper (15) of the cover film (14), which protrudes outwardly from the cover film (14) at the outer edge of the pressed part (2), is left behind.

16. A container having a barrier film, comprising the following characteristics:
• a pressed part (2) made of a cellulose-containing flat material (19) having a coating (9) for controlling the adhesive effect of a barrier film (11) on the inside, and
• a barrier film (11) lying in contact with the inside of the pressed part (2) and connected thereto, which has an adhesive effect which is modified by the coating of the flat material (19).

17. The container according to Claim 16, in which the pressed part (2) is pressed out of a flat material (19) having a core (20) made of an airlaid (21) made of a cellulose-containing material, at least one cellulose-containing non-woven fabric (22, 23) or paper on at least one side of the core (20), and the coating (9) for controlling the adhesive effect on the non-woven fabric (22) or paper.

18. The container according to Claim 16 or 17, in which the coating (9) is a silicone oil or another silicone-containing material, a wax, a grease or another release agent.

19. The container according to any one of Claims 16 to 18, in which the coating (9) is applied in a pattern which has coated and uncoated regions.

20. The container according to any one of Claims 16 to 19, in which the barrier film (11) comprises at least one layer made of one of the following materials: PET, PLA, EVOH, PA, PBT, PP, PE.

21. The container according to any one of Claims 16 to 20, in which the pressed part (2) has a circumferential flange (6) and the barrier film (11) is connected to the top (8) of the flange (6).

22. The container according to any one of Claims 16 to 21, which has a cover (13) which is preferably a cover film (14) which is sealed or glued circumferentially onto the outer edge of the barrier film (11).

23. The container according to any one of Claims 16 to 22, in which the barrier film (11) has an outwardly protruding first gripper (12) at the outer edge of the pressed part (2) and/or the cover film (14) seizes a second laterally protruding gripper (15) at the outer edge of the pressed part (2), and the barrier film and the cover film (14) are not connected to one another in the region of the first gripper (12) and the second gripper (15).

24. The container according to any one of Claims 16 to 23, which is a bowl (2), a lidded tray, a plate, a cup or a beaker.

## Revendications

1. Procédé de fabrication d'un récipient doté d'une feuille barrière, comportant les étapes suivantes :
• mise à disposition d'au moins un moule (27) doté d'une surface de moulage (28) correspondant à la forme extérieure ou à la forme intérieure du récipient (1),
• devant la surface de moulage (28), mise à disposition d'un matériau plat cellulosique (19) doté d'un revêtement (9) destiné à commander l'effet d'adhérence d'une feuille barrière (11), sur le côté opposé à la surface de moulage (28) correspondant à la forme extérieure du récipient (1) ou le côté tourné vers la surface de moulage (28) correspondant à la forme intérieure du récipient (1),
• pressage du matériau plat (19) contre la surface de moulage (28) de manière à former un corps comprimé (2) avec la forme du récipient (1),
• mise à disposition d'une feuille barrière présentant un effet d'adhérence modifiable par le biais du revêtement (9) du matériau plat (19) devant le côté intérieur du corps comprimé (2) et
• pressage de la feuille barrière (11) contre le côté intérieur du corps comprimé (2) et assemblage de celle-ci avec ce dernier.

2. Procédé selon la revendication 1, dans lequel le matériau plat (19) comporte un noyau (20) composé d'un airlaid (21) constitué d'un matériau cellulosique, au moins un non-tissé cellulosique (22, 23) ou papier sur au moins un côté du noyau (20) et un revêtement (9) appliqué sur le non-tissé (22, 23) ou papier.

3. Procédé selon la revendication 1 ou 2, dans lequel le matériau plat (19) est réalisé par formation de l' airlaid (21) sur un premier non-tissé cellulosique (23) ou papier et par application d'un deuxième non-tissé cellulosique (22) ou papier sur l'airlaid (21).

4. Procédé selon la revendication 2 ou 3, dans lequel le revêtement (9) est appliqué sur le non-tissé (22) ou papier avant la superposition de celui-ci et de l'airlaid (21).

5. Procédé selon l'une des revendications 1 à 4, dans lequel le revêtement (9) est ou comporte une huile de silicone ou un autre matériau contenant du silicone, une cire, une graisse ou un autre agent de séparation.

6. Procédé selon l'une des revendications 1 à 5, dans lequel le revêtement (9) est appliqué selon un motif comportant des régions revêtues et des régions non revêtues.

7. Procédé selon l'une des revendications 1 à 6, dans lequel la feuille barrière (11) comporte au moins une couche constituée de l'un des matériaux suivants : PET, PLA, EVOH, PA, PBT, PP, PE.

8. Procédé selon l'une des revendications 1 à 7, dans lequel un corps comprimé (2) doté d'un rebord périphérique (6) est fabriqué et la feuille barrière (11) est pressée contre le côté supérieur (8) du rebord (6) et assemblée avec celui-ci.

9. Procédé selon l'une des revendications 1 à 8, dans lequel la feuille barrière (11) est pressée sur le corps comprimé (2) par application d'une pression négative sur le côté de la feuille barrière (11) tourné vers le corps comprimé (2) et/ou par application d'une pression sur le côté de la feuille barrière (11) opposé au corps comprimé (2).

10. Procédé selon l'une des revendications 1 à 9, dans lequel la feuille barrière (11) est chauffée et pressée sur le corps comprimé (2).

11. Procédé selon l'une des revendications 1 à 10, dans lequel le corps comprimé (2) est réalisé au moyen d'un premier moule (27), le corps comprimé (2) est séparé du premier moule (27) et la feuille barrière (11) est pressée contre le corps comprimé (2) au moyen d'un deuxième moule (32).

12. Procédé selon l'une des revendications 1 à 12, dans lequel le corps comprimé (2) assemblé avec la feuille barrière (11) est rempli avec un produit et fermé à l'aide d'un couvercle (13).

13. Procédé selon l'une des revendications 1 à 12, dans lequel une feuille de recouvrement (14) est soudée ou collée de manière périphérique sur le bord extérieur de la feuille barrière (11) en tant que couvercle (13).

14. Procédé selon l'une des revendications 1 à 13, dans lequel, pendant ou après le pressage du corps comprimé (2), une partie du matériau plat (19) faisant saillie côté bord au-delà de la surface de moulage (28) est séparée et/ou dans lequel, pendant ou après le pressage de la feuille barrière (11) sur le corps comprimé (2), une partie extérieure de la feuille barrière (11) faisant saillie au-delà du bord extérieur du corps comprimé (2) est séparée et/ou dans lequel, pendant ou après le soudage ou collage, une partie extérieure de la feuille de recouvrement (14) faisant saillie au-delà de la feuille barrière (11) est séparée.

15. Procédé selon la revendication 14, dans lequel, lors de la séparation de la partie extérieure de la feuille barrière (11), une première partie de préhension (12) de la feuille barrière (11) faisant saillie vers l'extérieur à partir de la feuille barrière (11) est laissée sur le bord extérieur du corps comprimé et/ou dans lequel, lors de la séparation de la partie extérieure de la feuille de recouvrement (14), une deuxième partie de préhension (15) de la feuille de recouvrement (14) faisant saillie vers l'extérieur sur le bord extérieur du corps comprimé (2) à partir de la feuille de recouvrement (14) est laissée.

16. Récipient doté d'une feuille barrière comportant les caractéristiques suivantes :
• un (2) corps comprimé constitué d'un matériau plat cellulosique (19) doté d'un revêtement (9) destiné à commander l'effet d'adhérence d'une feuille barrière (11) sur le côté intérieur et
• une feuille barrière (11) appliquée sur le côté intérieur du corps comprimé (2) et assemblée avec celui-ci, avec un effet d'adhérence modifié par le revêtement du matériau plat (19).

17. Récipient selon la revendication 16, dans lequel le corps comprimé (2) est pressé à partir d'un matériau plat (19) doté d'un noyau (20) composé d'un airlaid (21) constitué d'un matériau cellulosique, d'au moins un non-tissé cellulosique (22, 23) ou papier sur au moins un côté du noyau (20) et du revêtement (9) destiné à commander l'effet d'adhérence sur le non-tissé (22) ou papier.

18. Récipient selon la revendication 16 ou 17, dans lequel le revêtement (9) est une huile de silicone ou un autre matériau contenant du silicone, une cire, une graisse ou un autre agent de séparation.

19. Récipient selon l'une des revendications 16 à 18, dans lequel le revêtement (9) est appliqué selon un motif présentant des régions revêtues et des régions non revêtues.

20. Récipient selon l'une des revendications 16 à 19, dans lequel la feuille barrière (11) comporte au moins une couche constituée de l'un des matériaux suivants : PET, PLA, EVOH, PA, PBT, PP, PE.

21. Récipient selon l'une des revendications 16 à 20, dans lequel un corps comprimé (2) présente un rebord périphérique (6) et la feuille barrière (11) est assemblée avec le côté supérieur (8) du rebord (6).

22. Récipient selon l'une des revendications 16 à 21, présentant un couvercle (13), lequel est de préférence une feuille de recouvrement (14) soudée ou collée de manière périphérique sur le bord extérieur de la feuille barrière (11).

23. Récipient selon l'une des revendications 16 à 22, dans lequel la feuille barrière (11) présente une première partie de préhension (12) faisant saillie vers l'extérieur sur le bord extérieur du corps comprimé (2) et/ou la feuille de recouvrement (14) soulève une deuxième partie de préhension (15) faisant saillie latéralement sur le bord extérieur du corps comprimé (2) et la feuille barrière et la feuille de recouvrement (14) ne sont pas reliées entre elles dans la région de la première partie de préhension (12) et de la deuxième partie de préhension (15).

24. Récipient selon l'une des revendications 16 à 23, lequel est une coupe (2), un bol, une assiette, une tasse ou un gobelet.
